# EUROPÄISCHE PATENTSCHRIFT

(11) **EP 3 330 134 B1**
(45) Veröffentlichungstag und Bekanntmachung des Hinweises auf die Patenterteilung: **12.12.2018**
(21) Anmeldenummer: 17204884.5
(22) Anmeldetag: 01.12.2017
(51) Int. Cl.: B60R 19/24

(54) **VERFAHREN ZUR HERSTELLUNG VON WENIGSTENS ZWEI VARIANTEN EINES VERKLEIDUNGSTEILS FÜR EIN KRAFTFAHRZEUG**
METHOD FOR THE PRODUCTION OF AT LEAST TWO VARIANTS OF A CLADDING PART FOR A MOTOR VEHICLE
PROCÉDÉ DE FABRICATION D'AU MOINS DEUX VARIANTES D'UN ÉLÉMENT D'HABILLAGE POUR UN VÉHICULE AUTOMOBILE

(30) Priorität: 05.12.2016 DE 102016123443
(43) Veröffentlichungstag der Anmeldung: 06.06.2018
(73) Patentinhaber: REHAU AG + Co, 95111 Rehau (DE)
(72) Erfinder: Krist, Matthias, 95189 Köditz (DE); Weller, Markus, 08626 Mühlental OT Oberwürschnitz (DE)

(56) Entgegenhaltungen:
- DE-U1-202015 100 661

## Beschreibung

Die vorliegende Erfindung betrifft ein Verfahren zur Herstellung von wenigstens zwei Varianten eines Verkleidungsteils für ein Kraftfahrzeug. DE202015100661 U1 ist der nächstliegende Stand der Technik und offenbart ein Verfahren zur Herstellung von wenigstens zwei Varianten eines Verkleidungsteils für ein Kraftfahrzeug, wobei das Verkleidungsteil hierbei in einer ersten Variante und in wenigstens einer zweiten Variante hergestellt wird.

Das Verkleidungsteil wird hierbei in einer ersten Variante und in wenigstens einer zweiten Variante hergestellt, mit
- einem ersten Verkleidungselement für die erste Variante eines Verkleidungsteils, aufweisend eine Sichtseite, und eine der Sichtseite gegenüberliegende Innenseite, und
- einem sich von dem ersten Verkleidungselement geometrisch unterscheidendem zweiten Verkleidungselement für die zweite Variante des Verkleidungsteils, aufweisend eine Sichtseite, und eine der Sichtseite gegenüberliegende Innenseite, und
- einem, jeweils das erste oder das zweite Verkleidungselement versteifendem Verstärkungselement, das mit der Innenseite des jeweiligen Verkleidungselementes verbunden wird, wobei das Verstärkungselement wenigstens eine lokal definierte Fügezone aufweist.

In einem ersten Schritt wird ein derartiges Verstärkungselement bei der Herstellung der ersten Variante mit dem ersten Verkleidungselement über eine Fügeverbindung zwischen der lokal definierten Fügezone des Verstärkungselementes und der Innenseite des ersten Verkleidungselementes verbunden.

Problematisch an einem Verfahren zur Herstellung von wenigstens zwei Varianten eines Verkleidungsteils für ein Kraftfahrzeug gemäß des Stands der Technik ist jedoch, dass bei sich geometrisch unterscheidenden Verkleidungselementen für die beiden Varianten jeweils ein separates Verstärkungselement erforderlich ist, da ansonsten die lokal definierte Fügezone nicht in Kontakt zu der Innenseite des anderen, zweiten Verkleidungselements steht. Dies führt dazu, dass zum einen ein erhöhter logistischer Aufwand erforderlich ist und zum anderen ein separates Werkzeug zur Herstellung einer zweiten Verstärkungselementvariante notwendig ist. Alternativ könnte im Bereich der Fügezone die Abstände zwischen Verstärkungselement und dem zweiten Verkleidungselement gleich gelassen werden, was jedoch zu einer Einschränkung der Außengeometrie, und somit der technischen Designfreiheit führen würde.

Aufgabe der vorliegenden Erfindung ist es daher ein Verfahren anzugeben, bei welchem unterschiedliche Varianten eines Verkleidungsteils für ein Kraftfahrzeug mit verringerten Kosten, erhöhter Designfreiheit und einem verringerten logistischen Aufwand hergestellt werden können.

Diese Aufgabe wird erfindungsgemäß gelöst durch ein Verfahren zur Herstellung von wenigstens zwei Varianten eines Verkleidungsteils für ein Kraftfahrzeug, wobei das Verkleidungsteil in einer ersten Variante und in wenigstens einer zweiten Variante hergestellt wird, mit
- einem ersten Verkleidungselement für die erste Variante eines Verkleidungsteils, aufweisend eine Sichtseite, und eine der Sichtseite gegenüberliegende Innenseite, und
- einem sich von dem ersten Verkleidungselement geometrisch unterscheidenden zweiten Verkleidungselement für die zweite Variante des Verkleidungsteils, aufweisend eine Sichtseite, und eine der Sichtseite gegenüberliegende Innenseite, und
- einem, jeweils das erste oder das zweite Verkleidungselement versteifenden Verstärkungselement, das mit der Innenseite des jeweiligen Verkleidungselementes verbunden wird, wobei das Verstärkungselement wenigstens eine lokal definierte Fügezone aufweist, und
- wobei in einem Schritt ein erstes derartiges Verstärkungselement bei der Herstellung der ersten Variante mit dem ersten Verkleidungselement über eine Fügeverbindung zwischen der lokal definierten Fügezone des Verstärkungselementes und der Innenseite des ersten Verkleidungselementes verbunden wird,
- wobei erfindungsgemäß das Verstärkungselement für beide Varianten des Verkleidungsteils identisch ausgebildet ist und,
- wobei in einem weiteren Schritt ein weiteres derartiges Verstärkungselement bei der Herstellung der zweiten Variante über ein separates Adapterelement mit dem zweiten Verkleidungselement verbunden wird,
- wobei zu diesem Zweck das Adapterelement über eine erste Fügeverbindung zwischen einem ersten Abschnitt des Adapterelementes und der lokal definierten Fügezone des weiteren Verstärkungselementes mit dem weiteren Verstärkungselement verbunden wird,
- und das Adapterelement über eine weitere Fügeverbindung zwischen einem, von dem ersten Abschnitt beabstandeten, zweiten Abschnitt des Adapterelementes mit der Innenseite des zweiten Verkleidungselementes verbunden wird.

Das erfindungsgemäße Verfahren bietet den großen Vorteil, dass nur eine Version des Verstärkungselementes für die beiden zu erzeugenden Varianten eines Verkleidungsteils für ein Kraftfahrzeug verwendet werden kann. Darüber hinaus besteht der große Vorteil darin, dass auch die für die Realisierung der Fügeverbindung und der ersten Fügeverbindung notwendigen Fügevorrichtungen (z.B. Ultraschallschweißvorrichtungen) an der gleichen Position ansetzen und insofern es hierfür keiner Neuausrichtung von Fügevorrichtungen bedarf und diese an starr geführt an die immer gleiche Stelle fahren können. Beides führt dazu, dass ein entsprechendes Verfahren deutlich kostengünstiger ist als die Verfahren gemäß des Stands der Technik.

Das Adapterelement wird bevorzugt vor der Herstellung der ersten Fügeverbindung mittels wenigstens einer im Bereich der Fügezone angeordneten Rastverbindung an dem Verstärkungselement vorfixiert. Hierdurch erleichtert sich die Realisierung der ersten Fügeverbindung erheblich.

Die Verkleidungselemente sind jeweils vorzugsweise schalenförmig ausgebildet.

Besonders bevorzugt sind die Verkleidungselemente Teil eines Spoilers oder Teil einer Stoßfängerverkleidung.

Die Fügeverbindung und/oder die erste Fügeverbindung und/oder die weitere Fügeverbindung ist bevorzugt eine stoffschlüssige Verbindung oder sind bevorzugt stoffschlüssige Verbindungen.

Die stoffschlüssige Verbindung ist bevorzugt eine Schweißverbindung oder eine Klebverbindung oder die stoffschlüssigen Verbindungen sind bevorzugt Schweißverbindungen und/oder Klebverbindungen. Die Schweißverbindung oder die Schweißverbindungen sind bevorzugt mittels eines Ultraschallschweißverfahrens realisiert.

Der geometrische Unterschied zwischen den beiden Varianten kann insbesondere einen, im Vergleich zu der ersten Variante, abschnittsweise größeren Abstand zwischen der Innenseite des zweiten Verkleidungselementes und dem weiteren Verstärkungselement umfassen.

Ferner Teil der Erfindung ist ein System bestehend aus:
- einem ersten Verkleidungselement für die erste Variante eines Verkleidungsteils, aufweisend eine Sichtseite, und eine der Sichtseite gegenüberliegende Innenseite, und
- einem sich von dem ersten Verkleidungselement geometrisch unterscheidendem zweiten Verkleidungselement für die zweite Variante des Verkleidungsteils, aufweisend eine Sichtseite, und eine der Sichtseite gegenüberliegende Innenseite, und
- einem, jeweils das erste oder das zweite Verkleidungselement versteifendem Verstärkungselement, das mit der Innenseite des jeweiligen Verkleidungselementes verbunden wird, wobei das Verstärkungselement wenigstens eine lokal definierte Fügezone aufweist,
- einem separaten Adapterelement zur Verbindung eines weiteren derartigen Verstärkungselements in dem zweiten Verkleidungselement bei der Herstellung der zweiten Variante, wobei das Verstärkungselement für beide Varianten des Verkleidungsteils identisch ausgebildet ist,
für die Durchführung des vorstehend beschriebenen Verfahrens oder Verfahrensvariante.

Die Verkleidungselemente, das Verstärkungselement und das Adapterelement sind bevorzugt jeweils einstückig aus einem thermoplastischen Werkstoff hergestellt.

Der thermoplastische Werkstoff kann Acrylester-Styrol-Acrylnitril (ASA), Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP), Polyvinylchlorid (PVC) oder Mischungen der vorgenannten Materialien umfassen.

Im Folgenden wird die Erfindung anhand lediglich Ausführungsbeispiele darstellender Zeichnungen erläutert.

Es zeigen schematisch:
- Fig. 1:: eine Draufsicht und einen Querschnitt der ersten Variante eines Verkleidungsteils;
- Fig. 2:: eine Draufsicht und eine Querschnittsdarstellung der zweiten Variante des Verkleidungsteils;
- Fig. 3:: eine perspektivische Darstellung eines Teils der zweiten Variante des Verkleidungsteils;
- Fig. 4:: verschiedene Ansichten des Adapterelementes.

In den Figuren werden gleiche oder funktionsgleiche Elemente mit den gleichen Bezugszeichen versehen.

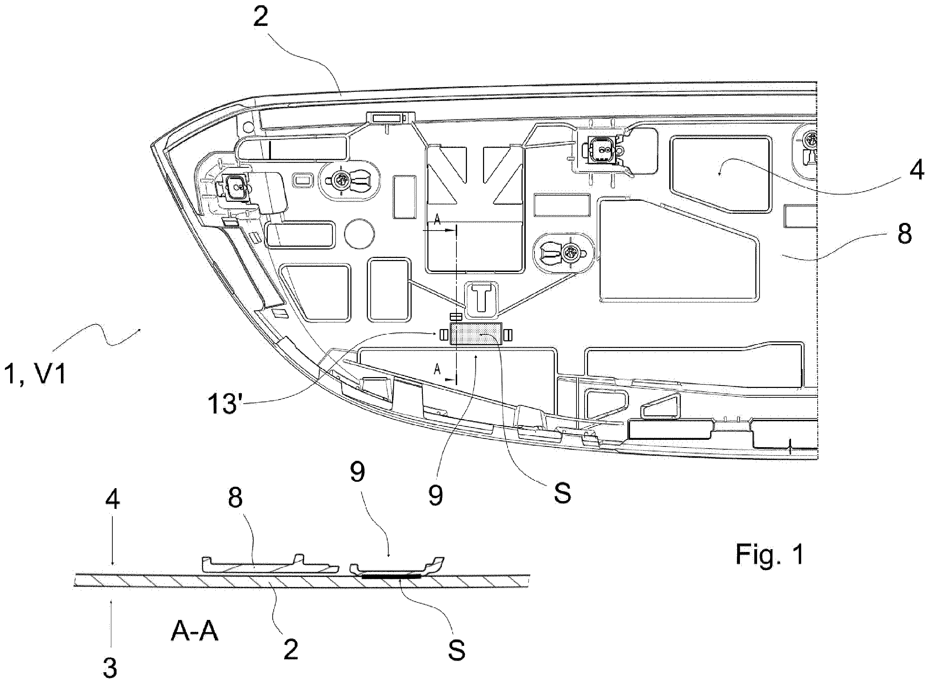

In Fig. 1 ist in einer Draufsicht eine erste Variante V1 eines Verkleidungsteils 1 für ein Kraftfahrzeug dargestellt. Die erste Variante V1 umfasst hierbei ein erstes Verkleidungselement 2 für die erste Variante V1 des Verkleidungsteils 1, aufweisend eine Sichtseite 3, und eine der Sichtseite 3 gegenüberliegende Innenseite 4 (vgl. Querschnittsdarstellung gemäß Schnittlinie A-A) und ein das erste Verkleidungselement 2 versteifendes Verstärkungselement 8, das mit der Innenseite 4 des Verkleidungselements 2 verbunden wird, wobei das Verstärkungselement 8 wenigstens eine lokal definierte Fügezone 9 aufweist. In einem Verfahrensschritt wird bei der Herstellung der ersten Variante V1 ein erstes derartiges Verstärkungselement 8 mit dem ersten Verkleidungselement 2 über eine Fügeverbindung S zwischen der lokal definierten Fügezone 9 des Verstärkungselements 8 und der Innenseite 4 des ersten Verkleidungselements 2 verbunden (vgl. auch Querschnittsdarstellung gemäß der Schnittlinie A-A).

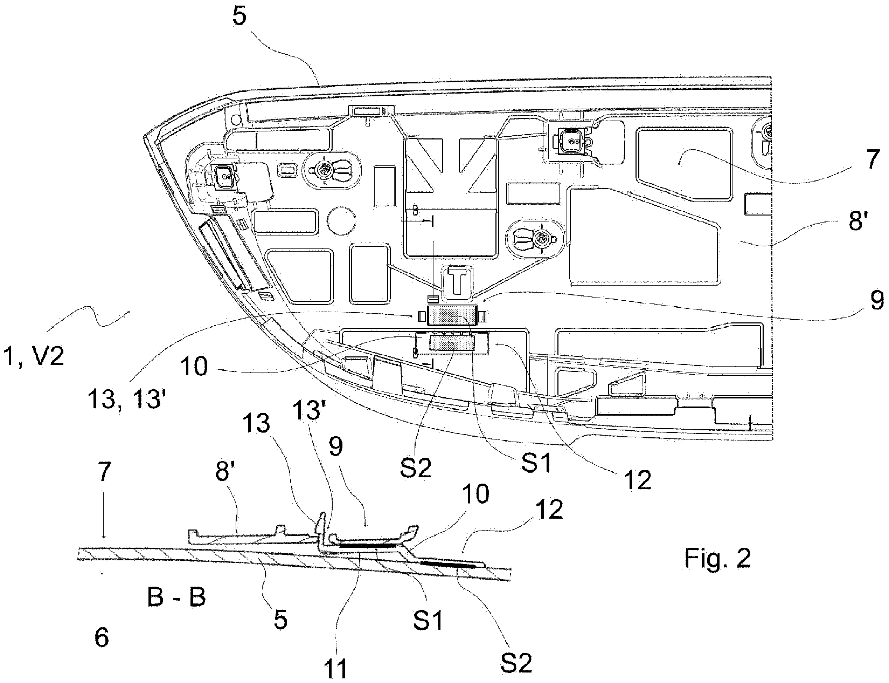

In Fig. 2 ist nunmehr eine Draufsicht sowie eine Querschnittsdarstellung der zweiten Variante V2 eines Verkleidungsteils 1 für ein Kraftfahrzeug dargestellt. Die zweite Variante V2 weist ein sich von dem ersten Verkleidungselement 2 geometrisch unterscheidendes zweites Verkleidungselement 5 für die zweite Variante V2 des Verkleidungsteils 1 auf, wobei dieses ebenfalls eine Sichtseite 6, und eine der Sichtseite 6 gegenüberliegende Innenseite 7 aufweist. Insbesondere in der Querschnittsdarstellung gemäß der Schnittlinie B-B ist ersichtlich, dass im Bereich der Fügezone 9 des Verstärkungselements 8' (welches identisch ausgestaltet ist zu dem bereits beschriebenen Verstärkungselement 8) ein größerer Abstand zu der Innenseite 7 des zweiten Verkleidungselements 5 besteht aufgrund dessen, dass das zweite Verkleidungselement 5 sich weiter nach außen wölbt, sodass eine direkte Fügeverbindung zwischen der Fügezone 9 und der Innenseite 7 des zweiten Verkleidungselementes 5 nicht möglich ist. Daher wird ein derartiges Verstärkungselement 8' bei der Herstellung der zweiten Variante V2 über ein separates Adapterelement 10 mit dem zweiten Verkleidungselement 5 verbunden. Zu diesem Zweck wird das Adapterelement 10 über eine erste Fügeverbindung S1 zwischen einem ersten Abschnitt 11 des Adapterelements 10 und der lokal definierten Fügezone 9 des weiteren Verstärkungselements 8' mit dem weiteren Verstärkungselement 8' verbunden. Ferner wird das Adapterelement 10 über eine weitere Fügeverbindung S2 zwischen einem von dem ersten Abschnitt 11 beabstandeten zweiten Abschnitt 12 des Adapterelements 10 mit der Innenseite 7 des zweiten Verkleidungselements 5 verbunden.

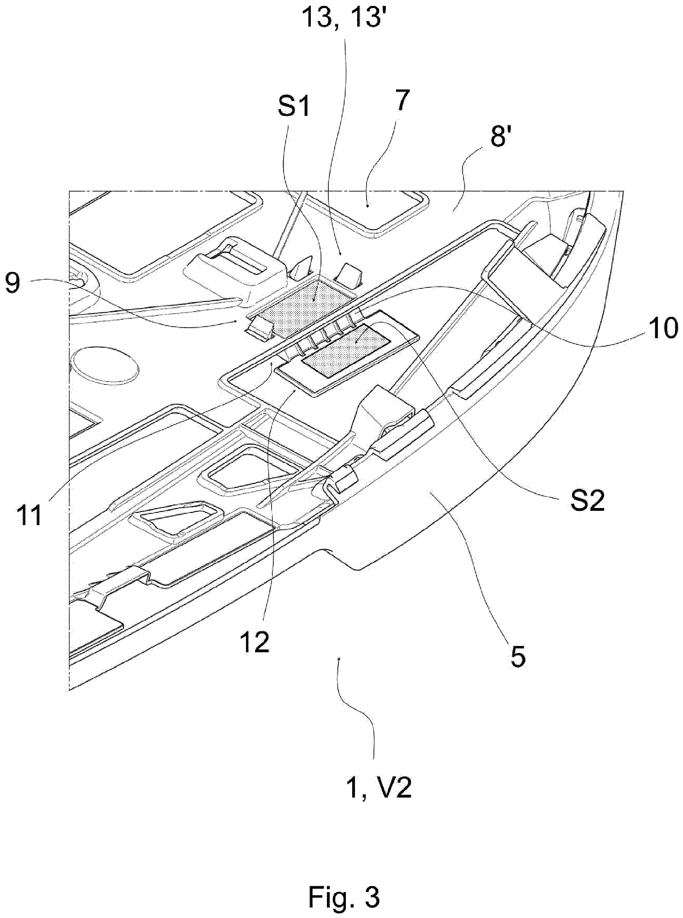

In Fig. 3 ist in einer perspektivischen Darstellung der zweiten Variante V2 des Verkleidungsteils 1 gut zu erkennen, dass das Adapterelement 10 vor der Herstellung der ersten Fügeverbindung S1 mittels wenigstens einer im Bereich der Fügezone 9 angeordneten Rastverbindung 13, 13' an dem Verstärkungselement 8' vorfixiert wird. Die Rastverbindung wird hierbei durch wenigstens einen Rasthaken 13 sowie eine entsprechende Rasthakenaufnahme 13' gebildet.

Die gezeigten Verkleidungselemente 2 und 5 sind jeweils schalenförmig ausgebildet und sind Teil eines Spoilers (insbesondere Heckspoilers). Die Fügeverbindung S und die erste Fügeverbindung S1 und die weitere Fügeverbindung S2 sind stoffschlüssige Verbindungen. Die Fügeverbindung S und die erste Fügeverbindung S1 und die weitere Fügeverbindung S2 sind insbesondere eine Schweißverbindung.

Wie in der Querschnittsdarstellung in Fig. 2 ersichtlich, umfasst der geometrische Unterschied zwischen den beiden Varianten V1 und V2 einen, im Vergleich zu der ersten Variante V1, abschnittsweise größeren Abstand zwischen der Innenseite 7 des zweiten Verkleidungselements 5 und dem weiteren Verstärkungselement 8'.

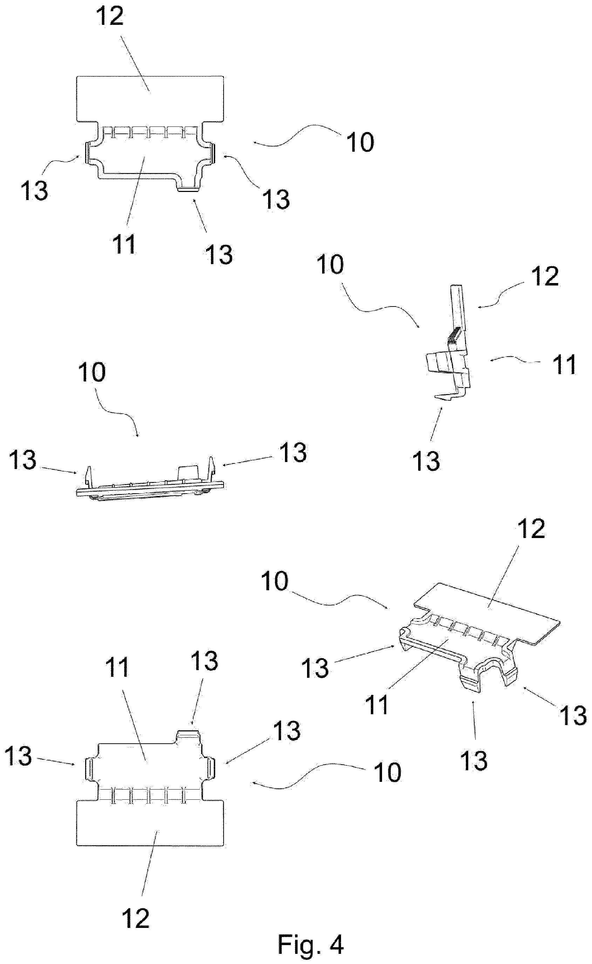

In der Fig. 4 ist in mehreren Ansichten das Adapterelement 10 dargestellt mit seinem ersten Abschnitt 11 und seinem vom ersten Abschnitt 11 beabstandeten zweiten Abschnitt 12, sowie des Rasthakens 13 der Rastverbindung 13, 13'.

Die Verkleidungselemente 2 und 5, das Verstärkungselement 8, 8' und das Adapterelement 10 sind bevorzugt jeweils einstückig aus einem thermoplastischen Werkstoff hergestellt.

Ein erfindungsgemäßes System besteht aus:
- einem ersten Verkleidungselement 2 für eine erste Variante V1 eines Verkleidungsteils 1, aufweisend eine Sichtseite 3, und eine der Sichtseite 3 gegenüberliegende Innenseite 4, und
- einem sich von dem ersten Verkleidungselement 2 geometrisch unterscheidenden zweiten Verkleidungselement 5 für eine zweite Variante V2 des Verkleidungsteils 1, aufweisend eine Sichtseite 6, und eine der Sichtseite 6 gegenüberliegende Innenseite 7, und
- einem, jeweils das erste 2 oder das zweite Verkleidungselement 5 versteifenden Verstärkungselement 8, 8', das mit der Innenseite 4, 7 des jeweiligen Verkleidungselementes 2, 5 verbindbar ist, wobei das Verstärkungselement 8, 8' eine lokal definierte Fügezone 9 aufweist,
- einem separaten Adapterelement 10 zur Verbindung eines weiteren derartigen Verstärkungselements 8' mit dem zweiten Verkleidungselement 5 bei der Herstellung der zweiten Variante V2, wobei das Verstärkungselement 8, 8' für beide Varianten V1, V2 des Verkleidungsteils 1 identisch ausgebildet ist,
für die Durchführung des vorstehend beschriebenen Verfahrens.

## Patentansprüche

1. Verfahren zur Herstellung von wenigstens zwei Varianten (V1, V2) eines Verkleidungsteils (1) für ein Kraftfahrzeug, wobei das Verkleidungsteil (1) hierbei in einer ersten Variante (V1) und in wenigstens einer zweiten Variante (V2) hergestellt wird, mit
- einem ersten Verkleidungselement (2) für die erste Variante (V1) des Verkleidungsteils (1), aufweisend eine Sichtseite (3), und eine der Sichtseite (3) gegenüberliegende Innenseite (4), und
- einem sich von dem ersten Verkleidungselement (2) geometrisch unterscheidenden zweiten Verkleidungselement (5) für die zweite Variante (V2) des Verkleidungsteils (1), aufweisend eine Sichtseite (6), und eine der Sichtseite (6) gegenüberliegende Innenseite (7), und
- einem, jeweils das erste (2) oder das zweite Verkleidungselement (5) versteifenden Verstärkungselement (8, 8'), das mit der Innenseite (4, 7) des jeweiligen Verkleidungselementes (2, 5) verbunden wird, wobei das Verstärkungselement (8, 8') wenigstens eine lokal definierte Fügezone (9) aufweist, und
wobei in einem Schritt ein erstes derartiges Verstärkungselement (8) bei der Herstellung der ersten Variante (V1) mit dem ersten Verkleidungselement (2) über eine Fügeverbindung (S) zwischen der lokal definierten Fügezone (9) des Verstärkungselementes (8) und der Innenseite (4) des ersten Verkleidungselementes (2) verbunden wird,
**dadurch gekennzeichnet, dass**
das Verstärkungselement (8, 8') für beide Varianten (V1, V2) des Verkleidungsteils (1) identisch ausgebildet ist und, dass
in einem weiteren Schritt ein weiteres derartiges Verstärkungselement (8') bei der Herstellung der zweiten Variante (V2) über ein separates Adapterelement (10) mit dem zweiten Verkleidungselement (5) verbunden wird,
wobei zu diesem Zweck das Adapterelement (10) über eine erste Fügeverbindung (S1) zwischen einem ersten Abschnitt (11) des Adapterelementes (10) und der lokal definierten Fügezone (9) des weiteren Verstärkungselementes (8') mit dem weiteren Verstärkungselement (8') verbunden wird,
und das Adapterelement (10) über eine weitere Fügeverbindung (S2) zwischen einem, von dem ersten Abschnitt (11) beabstandeten, zweiten Abschnitt (12) des Adapterelementes (10) mit der Innenseite (7) des zweiten Verkleidungselements (5) verbunden wird.

2. Verfahren nach Anspruch 1, **dadurch gekennzeichnet, dass** das Adapterelement (10) vor der Herstellung der ersten Fügeverbindung (S1) mittels wenigstens einer im Bereich der Fügezone (9) angeordneten Rastverbindung (13, 13') an dem Verstärkungselement (8') vorfixiert wird.

3. Verfahren nach einem der vorstehenden Ansprüche, **dadurch gekennzeichnet, dass** die Verkleidungselemente (2, 5) jeweils schalenförmigen ausgebildet sind.

4. Verfahren nach einem der vorstehenden Ansprüche, **dadurch gekennzeichnet, dass** die Verkleidungselemente (2, 5) Teil eines Spoilers oder Teil einer Stoßfängerverkleidung sind.

5. Verfahren nach einem der vorstehenden Ansprüche, **dadurch gekennzeichnet, dass** die Fügeverbindung (S) und/oder die erste Fügeverbindung (S1) und/oder die weitere Fügeverbindung (S2) eine stoffschlüssige Verbindung ist oder sind.

6. Verfahren nach Anspruch 5, **dadurch gekennzeichnet, dass** die Fügeverbindung (S) und/oder die erste Fügeverbindung (S1) und/oder die weitere Fügeverbindung (S2) eine Schweißverbindung oder eine Klebeverbindung ist oder sind.

7. Verfahren nach einem der vorstehenden Ansprüche, **dadurch gekennzeichnet, dass** der geometrische Unterschied zwischen den beiden Varianten (V1, V2) einen, im Vergleich zu der ersten Variante (V1), abschnittsweise größeren Abstand zwischen der Innenseite (7) des zweiten Verkleidungselements (5) und dem weiteren Verstärkungselement (8') umfasst.

8. System bestehend aus:
- einem ersten Verkleidungselement (2) für eine erste Variante (V1) eines Verkleidungsteils (1), aufweisend eine Sichtseite (3), und eine der Sichtseite (3) gegenüberliegende Innenseite (4), und
- einem sich von dem ersten Verkleidungselement (2) geometrisch unterscheidenden zweiten Verkleidungselement (5) für eine zweite Variante (V2) des Verkleidungsteils (1), aufweisend eine Sichtseite (6), und eine der Sichtseite (6) gegenüberliegende Innenseite (7), und
- einem, jeweils das erste (2) oder das zweite Verkleidungselement (5) versteifenden Verstärkungselement (8, 8'), das mit der Innenseite (4, 7) des jeweiligen Verkleidungselementes (2, 5) verbindbar ist, wobei das Verstärkungselement (8, 8') eine lokal definierte Fügezone (9) aufweist,
- einem separaten Adapterelement (10) zur Verbindung eines weiteren derartigen Verstärkungselements (8') mit dem zweiten Verkleidungselement (5) bei der Herstellung der zweiten Variante (V2), wobei das Verstärkungselement (8, 8') für beide Varianten (V1, V2) des Verkleidungsteils (1) identisch ausgebildet ist,
für die Durchführung des Verfahrens nach einem der vorstehenden Ansprüche 1 bis 7.

## Claims

1. A method for producing at least two variants (V1, V2) of a trim part (1) for a motor vehicle, wherein the trim part (1), in this case, is produced in a first variant (V1) and at least in a second variant (V2), with
- a first trim element (2) for the first variant (V1) of the trim part (1), comprising a visible side (3) and an inner side (4) opposite the visible side (3), and
- a second trim element (5), geometrically different from the first trim element (2), for the second variant (V2) of the trim part (1), comprising a visible side (6) and an inner side (7) opposite the visible side (6), and
- a reinforcing element (8, 8') reinforcing respectively the first (2) and the second reinforcing element (5), which is connected with the inner side (4, 7) of the respective trim element (2, 5), wherein the reinforcing element (8, 8') comprises at least one locally-defined joining zone (9), and
wherein, when producing the first variant (V1), in one step, a first reinforcing element (8) of this type is connected to the first trim element (2) via a joining connecting (S) between the locally-defined joining zone (9) of the reinforcing element (8) and the inner side (4) of the first trim element (2),
**characterized in that**
the reinforcing element (8, 8') is formed identically for both variants (V1, V2) of the trim part (1), and that
in a further step, when producing the second variant (V2), a further reinforcing element (8') of this type is connected to the second trim element (5) via a distinct adapter element (10),
wherein, to that end, the adapter element (10) is connected to the further reinforcing element (8') via a first joining connection (S1) between a first section (11) of the adapter element (10) and the locally-defined joining zone (9) of the further reinforcing element (8'),
and the adapter element (10) is connected to the inner side (7) of the second trim element (5) via another joining connection (S2) between a second section (12), spaced from the first section (11), of the adapter element (10).

2. The method according to claim 1, **characterized in that** before establishing the first joining connection (S1), the adapter element (10) is pre-fixed on the reinforcing element (8') by means of at least one latching connection (13, 13') arranged in the area of the joining zone (9).

3. The method according to one of the preceding claims, **characterized in that** the trim elements (2, 5) are respectively configured in the shape of a shell.

4. The method according to one of the preceding claims, **characterized in that** the trim elements (2, 5) are part of a spoiler or part of a bumper trim.

5. The method according to one of the preceding claims, **characterized in that** the joining connection (S) and/or the first joining connection (S1) and/or the further joining connection (S2) is/are an integral connection.

6. The method according to claim 5, **characterized in that** the joining connection (S) and/or the first joining connection (S1) and/or the further joining connection (S2) is/are a weld connection or an adhesive connection.

7. The method according to one of the preceding claims, **characterized in that** compared to the first variant (V1), the geometric difference between the two variants (V1, V2) includes a greater distance at least in sections between the inner side (7) of the second trim element (5) and the further reinforcing element (8').

8. System, consisting of:
- a first trim element (2) for a first variant (V1) of a trim part (1), comprising a visible side (3) and an inner side (4) opposite the visible side (3), and
- a second trim element (5), geometrically different from the first trim element (2), for a second variant (V2) of the trim part (1), comprising a visible side (6) and an inner side (7) opposite the visible side (6), and
- a reinforcing element (8, 8') respectively reinforcing the first (2) and the second reinforcing element (5), which is connected with the inner side (4, 7) of the respective trim element (2, 5), wherein the reinforcing element (8, 8') comprises a locally-defined joining zone (9),
- a distinct adapter element (10) for connection of another reinforcing element (8') of this type, with the second trim element (5), when producing the second variant (V2), wherein the reinforcing element (8, 8') is formed identically for both variants (V1, V2) of the trim part (1),
for performing the method according to one of the preceding claims.

## Revendications

1. Procédé de fabrication d'au moins deux variantes (V1, V2) d'une pièce d'habillage (1) pour un véhicule automobile, ladite pièce d'habillage (1) étant fabriquée dans une première variante (V1) et dans au moins une deuxième variante (V2), avec
- un premier élément d'habillage (2) pour la première variante (V1) de la pièce d'habillage (1), présentant un côté visible (3) et un côté intérieur (4) opposé au côté visible (3), et
- un deuxième élément d'habillage (5) de forme géométrique différente du premier élément d'habillage (2) pour la deuxième variante (V2) de la pièce d'habillage (1), présentant un côté visible (6) et un côté intérieur (7) opposé au côté visible (6), et
- un élément de renforcement (8, 8') raidissant respectivement le premier (2) ou le deuxième élément d'habillage (5), qui est relié au côté intérieur (4, 7) de l'élément d'habillage respectif (2, 5), ledit élément de renforcement (8, 8') présentant au moins une zone d'assemblage (9) localement définie, et
un premier élément de renforcement (8) de ce type étant, dans une première étape, relié lors de la réalisation de la première variante (V1) au premier élément d'habillage (2) par l'intermédiaire d'une liaison d'assemblage (S) entre la zone d'assemblage (9) localement définie de l'élément de renforcement (8) et le côté intérieur (4) du premier élément d'habillage (2),
l'élément de renforcement (8, 8') est réalisé de manière identique pour les deux variantes (V1, V2) de la pièce d'habillage (1) et en ce que,
dans une autre étape, un élément de renforcement (8') complémentaire de ce type est relié par l'intermédiaire d'un élément adaptateur (10) distinct, au deuxième élément d'habillage (5) lors de la fabrication de la deuxième variante (V2),
l'élément adaptateur (10) étant relié dans ce but par l'intermédiaire d'une première liaison d'assemblage (S1) entre une première partie (11) de l'élément adaptateur (10) et la zone d'assemblage (9) localement définie de l'élément de renforcement (8') supplémentaire, à l'autre élément de renforcement (8'),
et l'élément adaptateur (10) étant relié via une liaison d'assemblage (S2) supplémentaire entre une deuxième partie (12), écarté de la première partie (11), de l'élément adaptateur (10) avec le côté intérieur (7) du deuxième élément d'habillage (5).

2. Procédé selon la revendication 1, **caractérisé en ce que** l'élément adaptateur (10) est fixé préalablement, avant la réalisation de la première liaison d'assemblage (S1), au moyen d'au moins une liaison d'encliquetage (13, 13') disposée dans le secteur de la zone d'assemblage (9) sur le premier élément de renforcement (8').

3. Procédé selon l'une quelconque des revendications précédentes, **caractérisé en ce que** les éléments d'habillage (2, 5) sont réalisés respectivement en forme de coque.

4. Procédé selon l'une quelconque des revendications précédentes, **caractérisé en ce que** les éléments d'habillage (2, 5) sont une partie d'un déflecteur ou une partie d'une habillage de pare-chocs.

5. Procédé selon l'une quelconque des revendications précédentes, **caractérisé en ce que** la liaison d'assemblage (S) et/ou la première liaison d'assemblage (S1) et/ou la liaison d'assemblage (S2) supplémentaire est ou sont une liaison par adhérence de matière.

6. Procédé selon la revendication 5, **caractérisé en ce que** la liaison d'assemblage (S) et/ou la première liaison d'assemblage (S1) et/ou la liaison d'assemblage (S2) supplémentaire est ou sont une liaison soudée ou une liaison adhésive.

7. Procédé selon l'une quelconque des revendications précédentes, **caractérisé en ce que** la différence géométrique entre les deux variantes (V1, V2) comprend un écart par endroits supérieur, en comparaison avec la première variante (V1), entre le côté intérieur (7) du deuxième élément d'habillage (5) et de l'élément de renforcement (8') complémentaire.

8. Système consistent en :
- un premier élément d'habillage (2) pour une première variante (V1) d'une pièce d'habillage (1) présentant un côté visible (3) et un côté intérieur (4) opposé au côté visible (3), et
- un deuxième élément d'habillage (5) de forme géométrique différente du premier élément d'habillage (2) pour une deuxième variante (V2) de la pièce d'habillage (1), présentant un côté visible (6) et un côté intérieur (7) opposé au côté visible (6), et
- un élément de renforcement (8, 8') raidissant respectivement le premier (2) ou le deuxième élément d'habillage (5), qui peut être relié au côté intérieur (4, 7) de l'élément d'habillage respectif (2, 5), ledit élément de renforcement (8, 8') présentant une zone d'assemblage (9) localement définie,
- un élément adaptateur (10) séparé pour relier un autre élément de renforcement (8') de ce type au deuxième élément d'habillage (5) lors de la réalisation de la deuxième variante (V2), l'élément de renforcement (8, 8') étant réalisé de manière identique pour les deux variantes (V1, V2) de la pièce d'habillage (1)
afin de réaliser le procédé selon l'une quelconque des revendications précédentes 1 à 7.
